Europäisches Patentamt

European Patent Office

Office européen des brevets

(19)

(11) Veröffentlichungsnummer: **0 419 712 A1**

(12) # EUROPÄISCHE PATENTANMELDUNG

(21) Anmeldenummer: 89117971.5

(51) Int. Cl.⁵: **H04L 12/40, H04L 12/46**

(22) Anmeldetag: 28.09.89

(43) Veröffentlichungstag der Anmeldung:
**03.04.91 Patentblatt 91/14**

(84) Benannte Vertragsstaaten:
**CH DE FR GB IT LI SE**

(71) Anmelder: **Siemens Aktiengesellschaft
Wittelsbacherplatz 2
W-8000 München 2(DE)**

(72) Erfinder: **Flach, Werner, Dipl.-Ing.
Pfistermeisterstrasse 47
W-8450 Amberg(DE)**

(54) Entkopplungsglied für ein Kommunikations-Bus-System.

(57) Ein Entkopplungsglied, das eine einfache Buserweiterung zur Erhöhung der Teilnehmeranzahl zuläßt, ist bisher nicht bekannt. Daher soll aufgabengemäß ein solches geschaffen werden, das die Eröffnung eines neuen Bussegmentes ermöglicht, so daß Erweiterungen durch Bussegmente in Art einer Baumstruktur gebildet werden können. Hierzu dient ein Schnittstellenbaustein (1) mit zwei Treiberbausteinen (3, 4), die jeweils einen Sender (5) und einen Empfänger (6) aufweisen. An letztere ist über einen Ein- (11) und einen Ausgang (12) eine externe Leitung (7) von außen angeschlossen. Über einen elektronischen Schalter (8) schaltet eine Elektronik (9) des Schnittstellenbausteines (1) ein Signal (10) vom Empfänger (6) eines Treiberbausteines (3 oder 4) an den Sender (5) des anderen Treiberbausteines (3 oder 4) durch. Das am Ausgang (12) des Senders (5) anstehende Signal (13) ist gegenüber dem am Eingang (11) des Empfängers (6) anstehenden Signal (10) aufgefrischt. Der Schnittstellenbaustein (1) findet z.B. bei Verbundsystemen mit speicherprogrammierbaren Steuerungen Anwendung.

FIG 2

EP 0 419 712 A1

## ENTKOPPLUNGSGLIED FÜR EIN KOMMUNIKATIONS-BUS-SYSTEM

Die Erfindung betrifft Mittel zur Entkopplung von Bus-Segmenten eines Kommunikations-Bus-Systems.

Bei bisher bekannten Kommunikations-Bus-Systemen ist eine einfache Buserweiterung zur Erhöhung der Teilnehmerzahl unter der Bedingung, daß die Signale unverzögert übertragen werden, nicht vorgesehen.

Daher liegt der Erfindung die Aufgabe zugrunde, ein einfaches Entkopplungsglied für ein Kommunikations-Bus-System zu schaffen, welches die Eröffnung eines neuen Bussegmentes ermöglicht, an das mehrere Teilnehmer angeschlossen werden können.

Die Aufgabe wird durch einen Schnittstellenbaustein als Bindeglied zwischen Bussegmenten gelöst mit mindestens einem ersten und einem zweiten Treiberbaustein, die jeweils einen Sender und einen Empfänger aufweisen, an die jeweils über einen Ein- und einen Ausgang eine externe Leitung von außen angeschlossen ist, mit einem elektronischen Schalter zwischen beiden Treiberbausteinen und mit einer Elektronik, mit der signalabhängig ein Signal, am Eingang des Empfängers des ersten bzw. zweiten Treiberbausteins, durch Schließen des elektronischen Schalters an den Sender des anderen Treiberbausteins zur Weiterleitung durchschalbar ist, wobei das am Ausgang des Senders anstehende Signal gegenüber dem am Eingang des Empfängers anstehenden Signal aufgefrischt ist. Eine solche Buserweiterung ermöglicht den Aufbau von Bussegmenten in Art einer Baumstruktur. Ist der Empfänger ein Differenzempfänger und der Sender ein Differenzsender, so ist es hiermit möglich, eine Auffrischung des Signals am Empfänger über ein Differenzsignal, welches zwischen dem Differenzempfänger und dem Differenzsender anliegt, vorzunehmen und vom Differenzsender aus minimal verzögert weiterzuleiten. Es erweist sich als günstig, wenn die Elektronik als Umschaltkriterium für den elektrischen Schalter die Startflanke eines Signals an einem der beiden Eingänge der Empfänger verwendet. Zum mechanischen Schutz der Bauteile ist es vorteilhaft, wenn der Schnittstellenbaustein mit einem Gehäuse ausgeführt ist, in welchem die beiden Treiberbausteine, der elektronische Schalter und die Elektronik enthalten sind. Der Schnittstellenbaustein enthält die Möglichkeit, einen oder beide Bus-Linien über einen Schalter mit einer Abschlußkombination zu versehen. Dadurch bleiben auch die Empfänger in definierter Ruhelage, wenn kein Bus angeschlossen ist. Weist der Schnittstellenbaustein wahlweise Abschlußwiderstände zum Leitungsabschluß und zur Definition der Ruhelage am Bussegment auf, so ist hiermit ein den gegebenen Bedingungen anpaßbarer ungestörter Betrieb möglich. Um z.B. die Weiterleitung von Störsignalen zu vermeiden, erweist es sich als vorteilhaft, wenn zum Anschluß jedes Bussegmentes an den Schnittstellenbaustein jeweils Bus-Anschlüsse vorgesehen sind, die voneinander galvanisch getrennt sind. Eine zweckmäßige Ausführungsform mit Verzicht auf eine zusätzliche Spannungsversorgung ist gegeben, wenn der Schnittstellenbaustein von einem Teilnehmer über eine Schnittstelle mit Spannung versorgt werden kann, wobei der Teilnehmer über die Elektronik an dem Busverkehr zwischen den Bussegmenten angeschlossen ist. Eine einfache Überwachung des Betriebes läßt sich vornehmen, wenn die Elektronik zu Diagnosezwecken die Richtung des Busverkehrs und die Qualität der Signale anzeigt. Kann der Schnittstellenbaustein entweder über die Schnittstelle vom Teilnehmer oder über einen weiteren Stromversorgungsanschlß versorgt werden, so ist hiermit eine entsprechende Wahlmöglichkeit zur Stromversorgung geboten.

In der Zeichnung ist ein Ausführungsbeispiel der Erfindung dargestellt, das im folgenden näher beschrieben ist. Es zeigen:

FIG 1 den Anschluß von Teilnehmern an ein neu eröffnetes Bus-Segment,

FIG 2 den Schnittstellenbaustein,

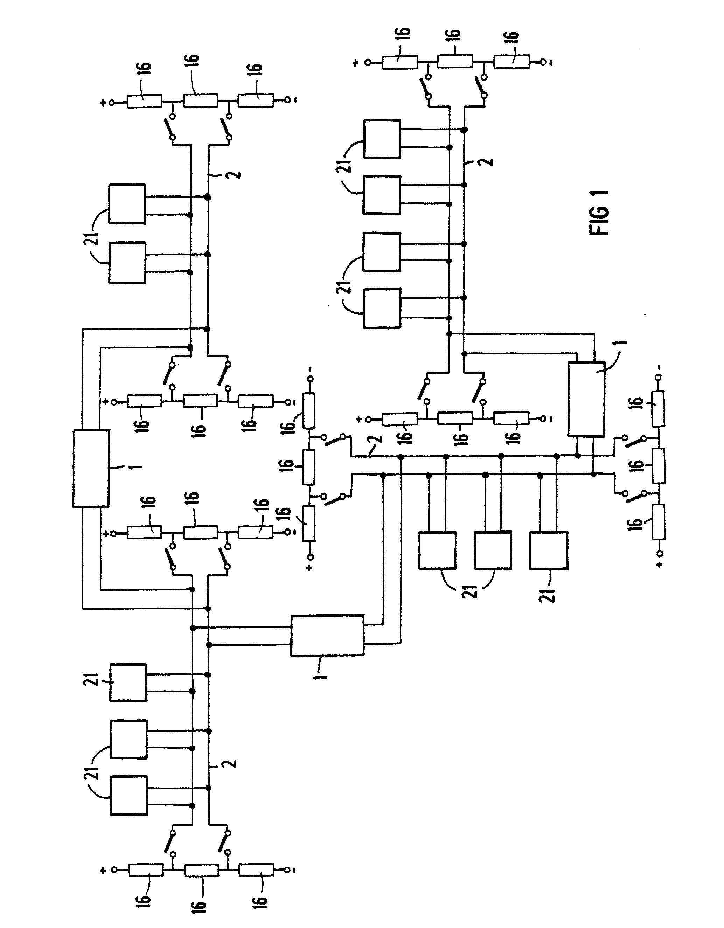

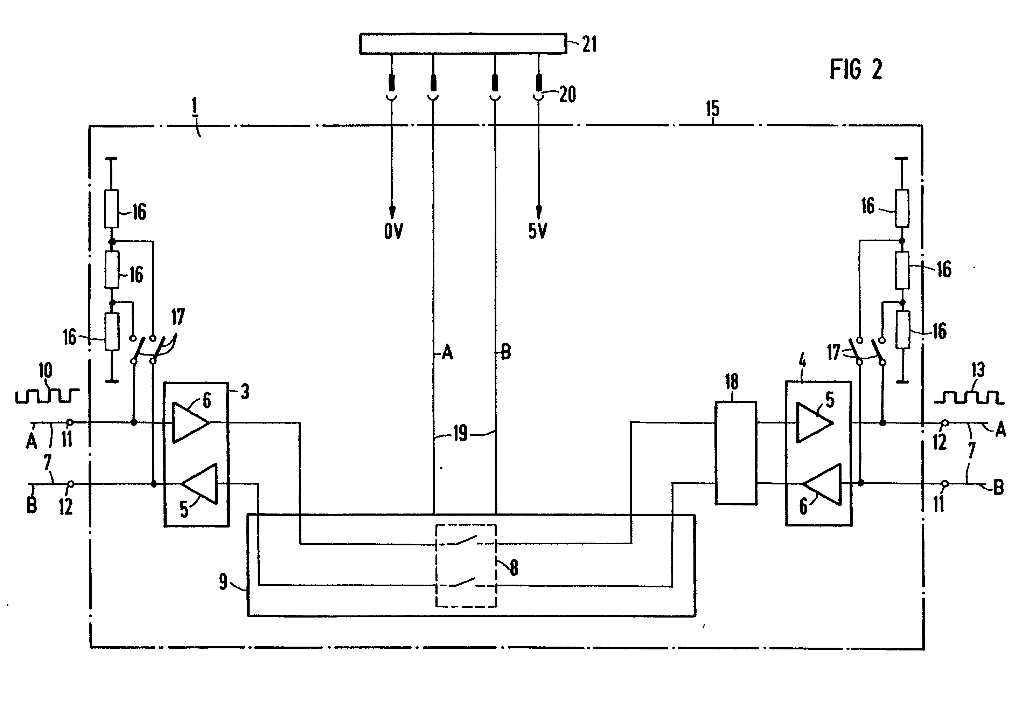

FIG 1 zeigt Bussegmente 2 von 1 km Leitungslänge mit Abschlußwiderständen 16 an den Enden und über die Leitung verteilt angeschlossenen Teilnehmern 21. Mit einem Schnittstellenbaustein 1 kann ein neues Bussegment 2 aufgemacht werden, wobei eine Entkopplung zwischen beiden Bussegmenten 2 stattfindet. Durch Optokoppler 18 (siehe FIG 2) kann auch eine galvanische Trennung der Bussegmente 2 erreicht werden. Bei dem Kommunikations-Bus-System handelt es sich um einen Zweidraht-Linienbus, für den zur Signalübertragung für beide Richtungen eine Durchschaltmöglichkeit vorgesehen werden muß. An das neu eröffnete Bussegment 2 kann ein abgesetztes Programmiergerät als Teilnehmer 21, das z.B. in der Warte eines Bergwerks installiert ist, angeschlossen werden. Auch der Anschluß weiterer Empfänger, d.h. Teilnehmer 21 an das neu aufgemachte Bussegment 2 ist möglich.

FIG 1 zeigt, daß auch eine Buserweiterung des neu eröffneten Bussegments 2 um weitere Bussegmente 2 möglich ist. Somit besteht die Möglichkeit, eine Baumstruktur zu schaffen, die für praktische Anwendungsfälle eine hohe Flexibilität und damit großen Nutzen mit sich bringt.

FIG 2 zeigt den Schnittstellenbaustein 1, der aus einem Gehäuse besteht, in welchem zwei Treiberbausteine 3, 4 über eine Elektronik 9 miteinander verbunden sind. Die beiden Treiberbausteine 3, 4 umfassen jeweils einen Sender 5 und einen Empfänger 6, an die externe, d.h. außerhalb des Gehäuses 15 geführte Leitungen 7 angeschlossen sind. Die Elektronik 9 im Gehäuse 15 bewertet die empfangenen Signale 10 und schaltet den Signalfluß entsprechend durch. Der Schnittstellenbaustein 1 besitzt außerdem Abschlußwiderstände 16, die über Schalter 17 an die externen Bus-Anschlüsse 11, 12 gelegt werden können. Durch die Abschlußwiderstände 16 sind die Leitungen 7 im Ruhe zustand bzw. hochfrequenz abgeschlossen, d.h. im Zustand ohne Signalübertragung auf den Pegel 0 bzw. 1 gesetzt. Der Empfang eines Telegrammes, das mit einem Startbit beginnt und anschliessend die Daten, das Paritybit und das Stopsignal enthält (Asynchrones UART-Protokoll), ist auf beiden Seiten des Schnittstellenbausteines 1 durch die Empfänger 6 des jeweiliegen Treiberbausteines 3 oder 4 möglich. Die Elektronik 9 überwacht auf beiden Seiten, wann die Startflanke des Telegramm-Bytes kommt, die als Umschaltkriterium zur Umschaltung eines elektronischen Schalters 8 in der Elektronik 9 verwendet wird. Es erfolgt in diesem Fall eine Umschaltung von dem einen Empfänger 6 am Eingang 11 des Schnittstellenbausteines 1 über den elektronischen Schalter 8 auf den am Ausgang 12 des Schnittstellenbausteines 1 befindlichen Sender 5. Die Überwachung der Startflanke auf beiden Seiten kann beispielsweise mittels eines Flip-Flops realisiert werden, welches anspricht, sobald die Startflanke des Telegramm-Bytes nach Low geht. Digitale Filter sorgen dafür, daß Störimpulse nicht fälschlich weitergeletet werden.

Bei der vorliegenden Ausführungsform werden Differenzempfänger 6 und Differenzsender 5 verwendet, die beide aktiviert werden können. Der Differenzempfänger 6 macht aus einem an seinem Eingang anstehenden Differenzstromsignal ein TTL-Signal. Die Signalinformation steckt hier also in der Stromrichtung. Umgekehrt steuert ein TTL-Signal am Sender 5, sofern er aktiviert ist, die Stromrichtung in der angeschlossenen Leitung.

Anstelle der Elektronik 9 könnte jedoch auch ein Mikroprozessor verwendet werden, der das Signal empfängt, auffrischt und weitersendet. Hierbei ist jedoch der Zeitverzug zwischen dem Senden und Empfangen nachteilig. Gerade diesen Zeitverzug kann man mit Hilfe des beschriebenen Schnittstellenbausteins 1 durch direkte Durchschaltung vermeiden. Die Elektronik 9 liefert auch einen direkten Teilnehmeranschluß 19, der wahlweise belegt werden kann. Über die Schnittstelle 20 kann der Schnittstellenbaustein 1 auf einfache Weise spannungsmäßig versorgt werden.

## Ansprüche

1. Schnittstellenbaustein (1) als Bindeglied zwischen Bus-Segmenten (2) mit mindestens einem ersten (3) und einem zweiten (4) Treiberbaustein, die jeweils einen Sender (5) und einen Empfänger (6) aufweisen, an die jeweils über einen Ein- (11) und einen Ausgang (12) eine externe Leitung (7) von außen angeschlossen ist, mit einem elektronischen Schalter (8) in einer Elektronik (9), mit der signalabhängig ein Signal (10), am Eingang (11) des Empfängers (6) des ersten (3) bzw. zweiten (4) Treiberbausteins, durch Schließen des elektronischen Schalters (8) an den Sender (5) des anderen Treiberbausteins (3, 4) zur Weiterleitung durchschaltbar ist, wobei das am Ausgang (12) des Senders (5) anstehende Signal (13) gegenüber dem am Eingang (11) des Empfängers (6) anstehenden Signal (10) aufgefrischt ist.

2. Schnittstellenbaustein nach Anspruch 1, **dadurch gekennzeichnet, daß** Mittel (3,4) zur Auffrischung des Signals (10) nach Amplitude und Phase vorgesehen sind.

3. Schnittstellenbaustein nach Anspruch 1 oder 2, **dadurch gekennzeichnet, daß** der Empfänger ein Differenzempfänger (6) und der Sender ein Differenzsender (5) ist.

4. Schnittstellenbaustein nach einem der vorangehenden Ansprüche, **dadurch gekennzeichnet,** daß die Elektronik (9) als Umschaltkriterium für den elektrischen Schalter (8) die Startflanke des Signals (15) an einem der beiden Eingänge (11) der Empfänger (6) verwendet.

5. Schnittstellenbaustein nach einem der vorangehenden Ansprüche, **dadurch gekennzeichnet,** daß der Schnittstellenbaustein (1) mit einem Gehäuse (ls) ausgeführt ist, in welchem die beiden Treiberbausteine (3, 4) der elektronische Schalter (8) und die Elektronik (9) enthalten sind.

6. Schnittstellenbaustein nach einem der vorangehenden Ansprüche, **dadurch gekennzeichnet,** daß er wahlweise Abschlußwiderstände (16) zum Leitungsabschluß und zur Definition der Ruhelage am Bus-Segment (2) aufweist.

7. Schnittstellenbaustein nach einem der vorangehenden Ansprüche, **dadurch gekennzeichnet,** daß zum Anschluß jedes Bus-Segments (2) an dem Schnittstellenbaustein (1) jeweils Bus-Anschlüsse (11, 12) vorgesehen sind, die voneinander galvanisch getrennt sind.

8. Schnittstellenbaustein nach einem der vorangehenden Ansprüche, **dadurch gekennzeichnet,** daß der Schnittstellenbaustein (1) von einem Teilnehmer (21) über eine Schnittstelle (20) mit Spannung versorgt werden kann, wobei der Teilnehmer (21) über die Elektronik (9) an den Busverkehr zwischen den Bus-Segmenten (2) angeschlossen ist.

9. Schnittstellenbaustein nach einem der vorangehenden Ansprüche, **dadurch gekennzeichnet,** daß die Elektronik (9) zu Diagnosezwecken die Richtung des Busverkehrs und die Qualität der Signale (10, 13) anzeigt.

10. Schnittstellenbaustein nach einem der vorangehenden Ansprüche, **dadurch gekennzeichnet,** daß der Schnittstellenbaustein (1) entweder über die Schnittstelle (20) vom Teilnehmer (21) oder über einen weiteren Stromversorgungsanschluß versorgt werden kann.

FIG 1

FIG 2

EP 0 419 712 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2185666 (GENERAL ELECTRIC COMPANY)<br>* Seite 1, Zeilen 19 - 22 *<br>* Seite 1, Zeilen 60 - 105 *<br>* Seite 1, Zeile 119 - Seite 2, Zeile 78;<br>Figuren 1, 2 * | 1, 3, 7 | H04L12/40<br>H04L12/46 |
| A |  | 2, 4-6 | |
| A | EP-A-292072 (PHILIPS)<br>* Zusammenfassung *<br>* Spalte 2, Zeile 22 - Spalte 3, Zeile 19;<br>Figuren 1-3 * | 1-6 | |
| A | EP-A-210123 (SIEMENS)<br>* Zusammenfassung; Figur 1 *<br>* Spalte 2, Zeile 18 - Spalte 3, Zeile 21 * | 1, 5, 8, 10 | |
| A | ELEKTRONIK.<br>vol. 35, no. 19, 19 September 1986, MUNCHEN DE<br>Seiten 146 - 154; R. WILSON:<br>"HOCHLEISTUNGSNETZE FUER PERIPHERIEGERAETE<br>Aufbau von SCSI- und IPI-Schnittstellen mit<br>RS-485 transceivern "<br>* das ganze Dokument * | 1-3, 6, 9 | |

**RECHERCHIERTE SACHGEBIETE (Int. Cl.5)**

H04L

Der vorliegende Recherchenbericht wurde für alle Patentansprüche erstellt

| Recherchenort | Abschlußdatum der Recherche | Prüfer |
|---|---|---|
| DEN HAAG | 07 JUNI 1990 | STAESSEN B. F. |